# FASCICULE DE BREVET EUROPEEN

(11) **EP 3 959 068 B1**
(45) Date de publication et mention de la délivrance du brevet: **08.03.2023**
(21) Numéro de dépôt: 20728100.7
(22) Date de dépôt: 22.04.2020
(51) Int. Cl.: B29C 73/02, F01D 5/00, B29C 73/24

(54) **PROCÉDÉ DE RÉPARATION D'UNE AUBE EN MATÉRIAU COMPOSITE**
VERFAHREN ZUR REPARATUR EINER AUS VERBUNDWERKSTOFF HERGESTELLTEN SCHAUFEL
METHOD FOR REPAIRING A VANE MADE OF COMPOSITE MATERIAL

(30) Priorité: 26.04.2019 FR 1904490
(43) Date de publication de la demande: 02.03.2022
(73) Titulaire: SAFRAN AIRCRAFT ENGINES, 75015 Paris (FR)
(72) Inventeur: TECHER, Marc-Emmanuel, Jean François, 77550 MOISSY-CRAMAYEL (FR); MOST, Vincent, Bernard, Serge, 77550 MOISSY-CRAMAYEL (FR)
(74) Mandataire: Ernest Gutmann - Yves Plasseraud S.A.S.
(86) Numéro de dépôt international: PCT/FR2020/000145
(87) Numéro de publication internationale: WO 2020/217006

(56) Documents cités:
- DE-A1-102016 217 605
- FR-A1- 2 931 719
- US-A1- 2012 163 981

## Description

### Domaine technique de l'invention

La présente invention concerne un procédé de réparation d'une aube de turbomachine, en particulier d'une aube en matériau composite.

### Présentation de l'invention

Une soufflante de turbomachine comporte classiquement un rotor comportant des aubes, par exemple en matériau composite, entouré par un carter de soufflante comportant une paroi interne comprenant un matériau abradable destiné à coopérer avec les extrémités externes ou sommets des aubes.

Dans le cas où des frottements se produisent entre les sommets des aubes et le matériau abradable, il existe un risque d'endommager les sommets des aubes, en particulier lorsque les aubes sont réalisées en matériau composite. Un tel endommagement génère un jeu entre lesdits sommets et le carter de soufflante, ce qui pénalise les performances de la turbomachine.

Afin d'éviter une telle dégradation des performances, il est envisagé de reconstruire les sommets des aubes endommagées. Des tolérances dimensionnelles très faibles, par exemple de l'ordre de 0,2 mm, sont imposées par les spécifications lors d'une telle reconstruction. Une solution envisagée est d'ajouter de la résine en sommet d'aube puis d'usiner la résine polymérisée à la cote voulue. Une telle solution est difficile à mettre en oeuvre dans le cas d'aubes composites, puisque les zones de sommet d'aubes rechargées à l'aide de la résine peuvent avoir tendance à se casser ou à se détacher lors de l'opération d'usinage. Par ailleurs, un tel procédé nécessite l'utilisation de centres d'usinage coûteux.

Le document US 2012/163981 A1 décrit un procédé de réparation d'une aube en matériau composite selon le préambule de la revendication 1.

Les documents FR 2 931 719 A1 et DE 10 2016 217605 A1 décrivent également des procédés de réparation d'une aube de turbomachine.

### Résumé de l'invention

L'invention vise à remédier aux inconvénients précités, de façon simple, fiable et peu onéreuse.

A cet effet, la présente invention concerne un procédé de réparation d'une aube en matériau composite, s'étendant selon une direction dite axiale, ladite aube comportant un pied et une pale dont l'extrémité axiale opposée au pied comporte une zone à réparer, ladite pale comportant une surface d'intrados et une surface d'extrados, caractérisé en ce qu'il comporte les étapes consistant à :
a) positionner l'aube dans un outillage,
b) positionner au moins un premier clinquant et au moins un second clinquant, au niveau de la zone d'extrémité à réparer, respectivement sur la surface d'intrados et sur la surface d'extrados de la pale, chaque clinquant comportant une extrémité axiale opposée au pied s'étendant axialement au-delà de l'extrémité correspondante de la pale et positionnée par rapport à une référence de l'outillage, ladite extrémité de chaque clinquant définissant l'extrémité axiale de la zone à réparer, lesdits clinquants délimitant entre eux un volume de rechargement,
c) remplir le volume de rechargement avec un matériau de rechargement pâteux ou fluide, tel qu'une résine non polymérisée ou qu'une pâte composite de rechargement, de façon à ce que le matériau de rechargement ne s'étende pas au-delà du volume de rechargement,
d) procéder au durcissement du matériau de rechargement, par cuisson ou polymérisation dudit matériau,
e) retirer les clinquants.

De cette manière, la cote axiale de la zone rechargée à l'aide du matériau de rechargement est imposée par les clinquants qui définissent le volume de rechargement. Il n'est donc pas utile de procéder à une opération d'usinage après durcissement du matériau de rechargement, ce qui évite le risque d'endommagement de la zone rechargée ainsi que l'utilisation d'un centre d'usinage.

L'outillage peut comporter des portées formant des surfaces de référence et coopérant avec le pied d'aube de manière à positionner axialement ladite aube dans l'outillage, l'outillage comportant en outre une butée apte à venir en appui sur le pied ou la pale de l'aube, de manière à positionner ladite aube dans l'outillage suivant une direction perpendiculaire à la direction axiale.

La butée est par exemple apte à venir en appui sur un bord de fuite de l'aube.

Le pied d'aube peut être maintenu en appui sur lesdites portées de l'outillage et sur ladite butée de l'outillage par des moyens de verrouillage. Les moyens de verrouillage peuvent comporter une sauterelle.

Le pied d'aube peut présenter une forme en queue d'aronde.

L'étape (c) peut être réalisée lorsque l'aube est montée dans l'outillage.

Lors de l'étape (b), lesdits clinquants peuvent être immobilisés en position sur l'aube, l'ensemble formé par ladite aube et les clinquants étant ensuite retiré de l'outillage avant l'étape (c).

Les clinquants peuvent être immobilisés sur l'aube, en particulier sur la pale, par l'intermédiaire de moyens de verrouillage, tels par exemple qu'au moins un serre-joint.

Lors de l'étape (b), les clinquants peuvent être positionnés axialement par rapport à une surface de référence de l'outillage.

Ladite surface de référence peut simuler la surface du matériau abradable d'un carter de soufflante d'une turbomachine, par exemple.

Lors de l'étape (c), un excès de matériau de rechargement s'étendant au-delà du volume de rechargement peut être retiré par arasage ou raclage.

L'outil d'arasage ou de raclage peut comporter une partie souple, par exemple en silicone, appliquée contre les extrémités axiales des clinquants de façon à retirer l'excès de matériau de rechargement. L'opération d'arasage ou raclage ne constitue ainsi pas une opération d'usinage, une telle opération étant permise par le caractère fluide ou pâteux du matériau de rechargement lors de cette étape.

Le matériau de rechargement peut être inséré dans le volume de rechargement à l'aide d'une spatule.

L'extrémité correspondante de la pale, la surface de référence et les clinquants délimitent le volume de rechargement fermé, le matériau étant inséré dans ledit volume fermé lors de l'étape (c), de façon à le remplir intégralement.

Un tel procédé ne nécessite alors pas d'étape d'arasage ou de raclage avant durcissement du matériau de rechargement, les dimensions du volume de rechargement fermé correspondant aux cotes souhaitées.

Le matériau de rechargement peut être inséré dans le volume de rechargement à l'aide d'une seringue.

Le matériau de rechargement peut être une résine thermodurcissable.

La résine est par exemple une résine époxyde ou à base de polyuréthane. La résine est par exemple chargée à l'aide de fibres de renfort courtes, telles par exemple que des fibres de verre, dont la longueur est inférieure à 3 mm. La résine peut également être chargée de billes de verre dont le diamètre est compris entre 50 et 100 microns.

La résine a par exemple un retrait inférieur à 2 %.

Une paroi de fermeture peut recouvrir lesdites extrémités des clinquants de manière à refermer le volume de rechargement, le matériau de rechargement étant inséré ou injecté dans ledit volume de rechargement, par exemple au travers d'un orifice ou d'une ouverture.

L'invention sera mieux comprise et d'autres détails, caractéristiques et avantages de l'invention apparaîtront à la lecture de la description suivante faite à titre d'exemple non limitatif en référence aux dessins annexés.

### Brève description des figures

[Fig. 1] est un diagramme illustrant les différentes étapes d'un procédé de réparation d'aube, selon une forme de réalisation de l'invention ;
[Fig. 2] est une vue schématique, en perspective, d'une aube montée dans l'outillage ;
[Fig. 3] est une vue schématique, en perspective, du sommet d'aube et des clinquants ;
[Fig. 4 à 6] sont des vues schématiques du sommet d'aube, illustrant différentes étapes successives du procédé ;
[Fig. 7] est une vue schématique du sommet d'aube, illustrant une autre forme de réalisation de l'invention.

### Description détaillée de l'invention

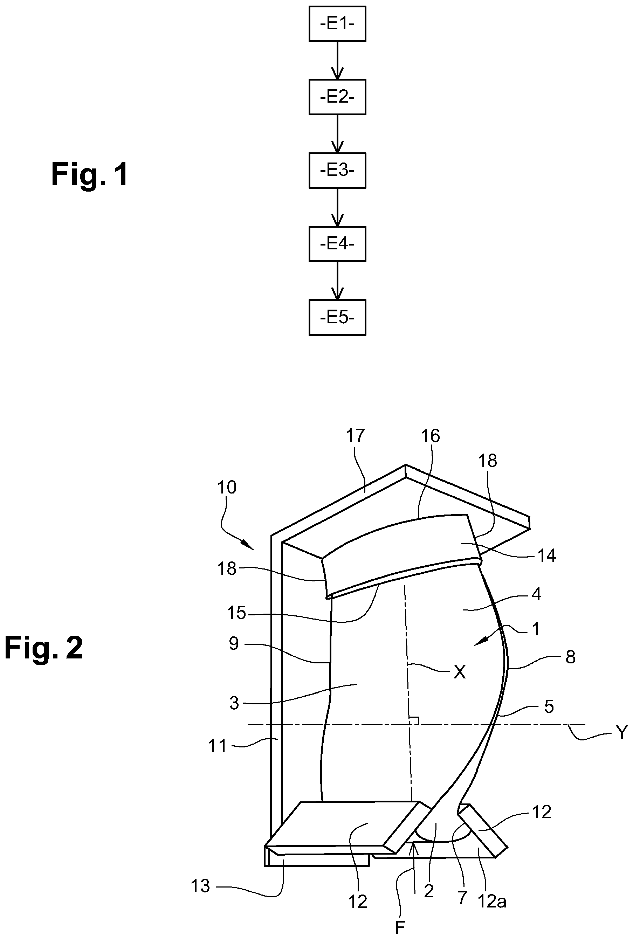

Un procédé de réparation d'une aube composite 1 de soufflante, pour une turbomachine, selon une forme de réalisation, est illustré schématiquement aux figures 1 à 6.

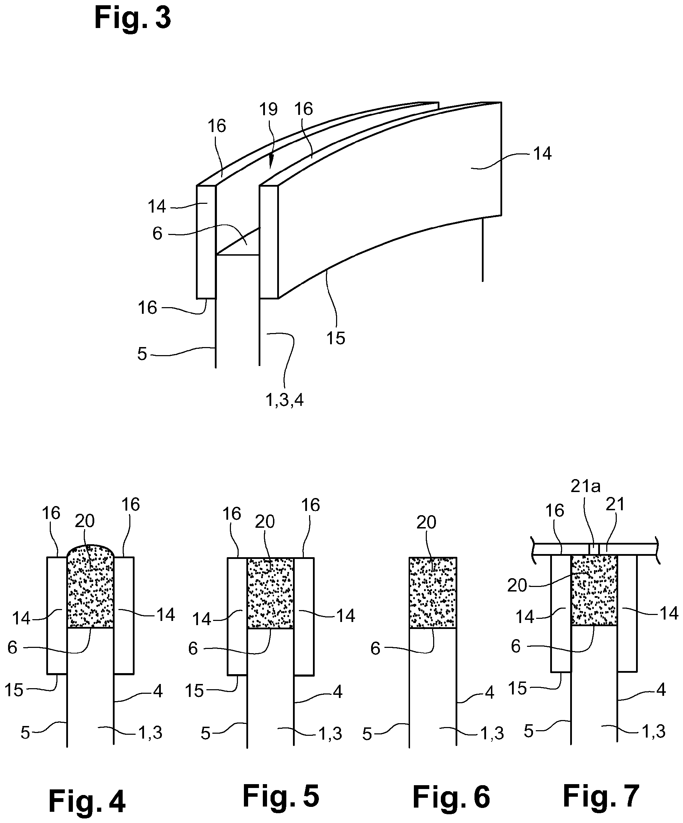

L'aube 1 s'étend selon un axe X et comporte un pied 2 d'aube, en forme de queue d'aronde, situé en partie basse à la figure 2, et une pale 3 profilée, comportant une surface d'intrados 4 et une surface d'extrados 5. La pale 3 comporte une première extrémité axiale, reliée au pied 2 d'aube, et une seconde extrémité axiale, également appelée sommet 6 (figure 3), opposée à la première extrémité. Le pied 2 comporte deux surfaces inclinées 7 tournées en direction du sommet 6 de l'aube, formant des portées destinées à coopérer avec des surfaces complémentaires d'un disque de rotor de la soufflante.

Les surface d'intrados 4 et d'extrados 5 se rejoignent au niveau d'un bord d'attaque 8 et d'un bord de fuite 9. Le bord d'attaque 8 est destiné à être situé en amont du bord de fuite 9, par rapport au sens d'écoulement du flux d'air au travers de la soufflante.

L'aube 1 est réalisée dans un matériau composite comportant par exemple un tissu fibreux noyé dans une matrice de résine.

L'objectif du procédé de réparation selon l'invention est de reconstituer la géométrie d'origine du sommet 6 de l'aube 1 après dégradation dudit sommet 6. La reconstitution, également appelée rechargement, du sommet 6 de l'aube 1 doit être réalisée avec les mêmes tolérances dimensionnelles qu'une aube 1 d'origine, par exemple de l'ordre de 0,2 mm, ce qui impose en particulier de maîtriser parfaitement la distance axiale entre l'extrémité correspondante 6 de la pale 3 et l'axe du rotor de la soufflante, et donc la distance axiale entre l'extrémité correspondante 6 de la pale 3 et les portées 7 du pied 2 d'aube.

Le procédé de réparation selon l'invention comporte tout d'abord une étape (E1) de positionnement et de verrouillage de l'aube 1 dans un outillage 10.

L'outillage 10 comporte un support 11 fixe, deux zones d'appui 12 et un organe de butée 13 fixes par rapport au support 11.

Chaque zone d'appui 12 comporte une surface 12a inclinée destinée à former un appui ou une portée pour les portées complémentaires 7 du pied 2 d'aube, de manière à limiter le déplacement de l'aube 1 selon l'axe X, vers le haut à la figure 2.

L'extrémité aval ou l'extrémité formant le bord de fuite 9 du pied 2 de l'aube vient par ailleurs en appui sur l'organe de butée 13 de l'outillage 10, de façon à assurer le positionnement de l'aube 1 par rapport à l'outillage 10 selon un axe Y, perpendiculaire à l'axe X.

Des moyens de verrouillage tels par exemple qu'une bride de type sauterelle, exercent un effort axial F dirigé vers le haut à la figure 2, de façon à maintenir les portées 7 du pied 2 d'aube sur les portées 12a des zones d'appui 12.

L'outillage 10 comporte en outre des clinquants 14 plaqués de part et d'autre de la zone de sommet 6 d'aube, c'est-à-dire contre les surfaces d'intrados 4 et d'extrados 5 de l'aube 1. La forme de chaque clinquant 14 est adaptée à la forme de la surface d'intrados 4 ou d'extrados 5 de l'aube 1. Chaque clinquant 14 comporte une première extrémité axiale 15, tournée vers le pied 2 d'aube, et une seconde extrémité axiale 16 opposée. La position des secondes extrémités axiales 16 des clinquants 14 par rapport au reste de l'outillage 10 est maîtrisée, par exemple par appui desdites secondes extrémités 16 sur une zone d'appui 17 du support 11. En d'autres termes, il est possible de maîtriser la distance axiale entre les portées 7 et les secondes extrémités 16 des clinquants 14. Les bords latéraux 18 des clinquants 14 se rejoignent au niveau du bord de fuite 9 et du bord d'attaque 8 du sommet 6 de la pale 3.

Le sommet 6 endommagé de la pale 3 et les clinquants 14 délimitent alors un volume 19 à reconstituer.

Les clinquants 14 peuvent être solidaires de l'outillage 10 ou être rendus solidaires de l'aube 1. Dans ce dernier cas, les clinquants 14 peuvent par exemple être serrés sur le sommet 6 d'aube, par tous moyens appropriés, tels par exemple que des serre-joints.

L'aube 1 et les clinquants 14 peuvent alors être retirés de l'outillage 10.

Le volume 19 précité peut ensuite être rempli d'un matériau de rechargement 20 pâteux ou fluide (étape E, figures 1 et 4). Ce matériau 20 est par exemple une résine thermodurcissable, par exemple une résine époxyde ou à base de polyuréthane. La résine est par exemple chargée à l'aide de fibres de renfort courtes, telles par exemple que des fibres de verre, dont la longueur est inférieure à 3 mm. La résine peut également être chargée de billes de verre dont le diamètre est compris entre 50 et 100 microns.

L'excès de matériau thermodurcissable 20 peut être retiré lors d'une étape d'arasage ou de raclage (étape E3, figures 1 et 5) à l'aide d'un outil, par exemple qui peut être un outil souple en silicone, de manière à éviter toute détérioration des clinquants 14. Il s'agit en particulier d'éviter de modifier la cote entre les secondes extrémités 16 des clinquants 14 et les portées 7 du pied 2 d'aube.

Le matériau de rechargement 20 est ensuite durci par polymérisation, par exemple lors d'une étape de cuisson (étape E4, figure 1). Lors de cette étape, le matériau de rechargement a par exemple un retrait inférieur à 2 %. La position des secondes extrémités 16 des clinquants 14 peut être ajustée de façon à tenir compte ou de façon à anticiper un tel retrait et obtenir ainsi, après retrait et durcissement, la cote souhaitée.

Les clinquants 14 peuvent ensuite être retirés (étape E5, figures 1 et 6) de façon à obtenir l'aube 1 réparée, c'est-à-dire l'aube 1 dont le sommet 6 endommagé a été reconstitué, rechargé ou reconstruit, de façon à retrouver les dimensions d'origine de l'aube 1, aux tolérances dimensionnelles près.

Selon une autre forme de réalisation illustrée à la figure 7, une paroi de fermeture 21 peut recouvrir les secondes extrémités 16 des clinquants 14 de manière à refermer le volume 19 à reconstituer. Le matériau de rechargement 20 peut être inséré ou injecté dans ledit volume 19, par exemple à l'aide d'une seringue, au travers d'une ouverture 21a, de façon à remplir intégralement ledit volume 19. L'aube 1, les clinquants 14 et la paroi de fermeture 21 peuvent être maintenus en position sur le reste de l'outillage 10 lors de l'étape d'insertion ou d'injection du matériau de rechargement 20 dans ledit volume.

Ledit matériau 20 peut ensuite être durci, par exemple par cuisson, puis l'aube 1 ainsi reconstituée peut être retirée de l'outillage 10.

## Revendications

1. Procédé de réparation d'une aube (1) en matériau composite, s'étendant selon une direction (X) dite axiale, ladite aube (1) comportant un pied (2) et une pale (3) dont l'extrémité axiale opposée au pied (2) comporte une zone à réparer, ladite pale (3) comportant une surface d'intrados (4) et une surface d'extrados (5), **caractérisé en ce qu'**il comporte les étapes consistant à :
a) positionner l'aube (1) dans un outillage (10),
b) positionner au moins un premier clinquant (14) et au moins un second clinquant (14), au niveau de la zone d'extrémité à réparer, respectivement sur la surface d'intrados (4) et sur la surface d'extrados (5) de la pale (3), chaque clinquant (14) comportant une extrémité axiale (16) opposée au pied (2) s'étendant axialement au-delà de l'extrémité correspondante (6) de la pale (3) et positionnée par rapport à une référence de l'outillage (10), ladite extrémité (16) de chaque clinquant (14) définissant l'extrémité axiale de la zone à réparer, lesdits clinquants (14) délimitant entre eux un volume de rechargement (19),
c) remplir le volume de rechargement (19) avec un matériau de rechargement (20) pâteux ou fluide, tel qu'une résine non polymérisée ou qu'une pâte composite de rechargement, de façon à ce que le matériau de rechargement (20) ne s'étende pas au-delà du volume de rechargement (19),
d) procéder au durcissement du matériau de rechargement (20), par cuisson ou polymérisation dudit matériau (20),
e) retirer les clinquants (14).

2. Procédé selon la revendication 1, **caractérisé en ce que** l'outillage (10) comporte des portées (12, 12a) formant des surfaces de référence et coopérant avec le pied (2) d'aube de manière à positionner axialement ladite aube (1) dans l'outillage (10), l'outillage (10) comportant en outre une butée (13) apte à venir en appui sur le pied (2) ou la pale (3) de l'aube (1), de manière à positionner ladite aube (1) dans l'outillage (10) suivant une direction (Y) perpendiculaire à la direction axiale (X).

3. Procédé selon la revendication 1 ou 2, **caractérisé en ce que** l'étape (c) est réalisée lorsque l'aube (1) est montée dans l'outillage (10).

4. Procédé selon la revendication 1 ou 2, **caractérisé en ce que**, lors de l'étape (b), lesdits clinquants (14) sont immobilisés en position sur l'aube (1), l'ensemble formé par ladite aube (1) et les clinquants (14) étant ensuite retiré de l'outillage (10) avant l'étape (c).

5. Procédé selon l'une des revendications 1 à 4, **caractérisé en ce que**, lors de l'étape (b), les clinquants (14) sont positionnés axialement par rapport à une surface de référence de l'outillage (10).

6. Procédé selon l'une des revendications 1 à 5, **caractérisé en ce que**, lors de l'étape (c), un excès de matériau de rechargement (20) s'étendant au-delà du volume de rechargement (19) est retiré par arasage ou raclage.

7. Procédé selon l'une des revendications 1 à 6 et selon la revendication 5, **caractérisé en ce que** l'extrémité correspondante (6) de la pale (3), la surface de référence et les clinquants (14) délimitent le volume de rechargement (19), le matériau (20) étant inséré dans ledit volume (19) lors de l'étape (c), de façon à le remplir intégralement.

8. Procédé selon l'une des revendications 1 à 7, **caractérisé en ce que** le matériau de rechargement (20) est une résine thermodurcissable.

9. Procédé selon l'une des revendications 1 à 8, **caractérisé en ce qu'**une paroi de fermeture (21) recouvre lesdites extrémités (16) des clinquants (14) de manière à refermer le volume (19) de rechargement, le matériau de rechargement (20) étant inséré ou injecté dans ledit volume de rechargement (19).

## Patentansprüche

1. Verfahren zur Reparatur einer Schaufel (1) aus Verbundmaterial, die sich in einer Richtung (X), axiale Richtung genannt, erstreckt, wobei die Schaufel (1) einen Schaufelfuß (2) und ein Schaufelblatt (3) aufweist, dessen dem Schaufelfuß (2) entgegengesetztes axiales Ende einen zu reparierenden Bereich umfasst, wobei das Schaufelblatt (3) eine Druckseite (4) und eine Saugseite (5) aufweist,
**dadurch gekennzeichnet, dass** es die folgenden Schritte umfasst:
a) Positionieren der Schaufel (1) in einem Werkzeug (10),
b) Positionieren von zumindest einem ersten Blech (14) und zumindest einem zweiten Blech (14) im Bereich des zu reparierenden Endbereichs auf der Druckseite (4) bzw. der Saugseite (5) der Schaufel (3), wobei jedes Blech (14) ein dem Schaufelfuß (2) entgegengesetztes axiales Ende (16) aufweist, das sich axial über das entsprechende Ende (6) der Schaufel (3) hinaus erstreckt und in Bezug auf einen Bezugspunkt des Werkzeugs (10) positioniert ist, wobei das Ende (16) jedes Blechs (14) das axiale Ende des zu reparierenden Bereichs definiert, wobei die Bleche (14) zwischen sich einen Nachfüllraum (19) begrenzen,
c) Füllen des Nachfüllraums (19) mit einem pastösen oder fluiden Nachfüllmaterial (20), wie etwa einem nicht polymerisierten Harz oder einer Nachfüllverbundpaste, derart, dass sich das Nachfüllmaterial (20) nicht über den Nachfüllraum (19) hinaus erstreckt,
d) Aushärten des Nachfüllmaterials (20) durch Brennen oder Polymerisieren des Materials (20),
e) Entfernen der Bleche (14).

2. Verfahren nach Anspruch 1,
**dadurch gekennzeichnet, dass** das Werkzeug (10) Auflageflächen (12, 12a) aufweist, die Bezugsflächen bilden und mit dem Schaufelfuß (2) zusammenwirken, um die Schaufel (1) axial in dem Werkzeug (10) zu positionieren, wobei das Werkzeug (10) ferner einen Anschlag (13) aufweist, der in Anlage an den Schaufelfuß (2) oder das Schaufelblatt (3) der Schaufel (1) gelangen kann, um die Schaufel (1) im Werkzeug (10) in einer Richtung (Y) zu positionieren, die senkrecht zur axialen Richtung (X) verläuft.

3. Verfahren nach Anspruch 1 oder 2,
**dadurch gekennzeichnet, dass** Schritt (c) erfolgt, wenn die Schaufel (1) im Werkzeug (10) montiert ist.

4. Verfahren nach Anspruch 1 oder 2,
**dadurch gekennzeichnet, dass** in Schritt (b) die Bleche (14) in ihrer Position an der Schaufel (1) festgelegt werden, wobei anschließend die aus der Schaufel (1) und den Blechen (14) gebildete Anordnung vor Schritt (c) aus dem Werkzeug (10) entfernt wird.

5. Verfahren nach einem der Ansprüche 1 bis 4,
**dadurch gekennzeichnet, dass** in Schritt (b) die Bleche (14) axial in Bezug auf eine Bezugsfläche des Werkzeugs (10) positioniert werden.

6. Verfahren nach einem der Ansprüche 1 bis 5,
**dadurch gekennzeichnet, dass** in Schritt (c) überschüssiges Nachfüllmaterial (20), das sich über den Nachfüllraum (19) hinaus erstreckt, durch Abschaben oder Abstreifen entfernt wird.

7. Verfahren nach einem der Ansprüche 1 bis 6 und nach Anspruch 5,
**dadurch gekennzeichnet, dass** das entsprechende Ende (6) des Schaufelblattes (3), die Bezugsfläche und die Bleche (14) den Nachfüllraum (19) begrenzen, wobei in Schritt (c) das Material (20) in den Raum (19) so eingebracht wird, dass es diesen vollständig ausfüllt.

8. Verfahren nach einem der Ansprüche 1 bis 7,
**dadurch gekennzeichnet, dass** das Nachfüllmaterial (20) ein wärmehärtendes Harz ist.

9. Verfahren nach einem der Ansprüche 1 bis 8,
**dadurch gekennzeichnet, dass** eine Verschlusswand (21) die Enden (16) der Bleche (14) bedeckt, um den Nachfüllraum (19) zu verschließen, wobei das Nachfüllmaterial (20) in den Nachfüllraum (19) eingepresst oder eingespritzt wird.

## Claims

1. A method of repairing a blade (1) made of composite material, extending in an axial direction (X), said blade (1) comprising a root (2) and a blade (3) whose axial end opposite the root (2) comprises an area to be repaired, said blade (3) comprising an intrados (4) surface and an extrados (5) surface, **characterised in that** it comprises the steps consisting in:
a) positioning the blade (1) in a tooling (10),
b) positioning at least a first foil (14) and at least a second foil (14), at the level of the end area to be repaired, respectively on the intrados (4) surface and on the extrados (5) surface of the blade (3), each foil (14) having an axial end (16) opposite the root (2) extending axially beyond the corresponding end (6) of the blade (3) and positioned with respect to a reference of the tooling (10) said end (16) of each foil (14) defining the axial end of the area to be repaired, said foils (14) delimiting between them a refill volume (19),
c) filling the refill volume (19) with a pasty or fluid refill material (20), such as a non-polymeric resin such as an unpolymerized resin or a composite refill paste, so that the refill material (20) does not extend beyond the refill volume (19),
d) curing the refill material (20) by baking or polymerizing said material (20),
e) removing the foils (14).

2. A method according to claim 1, **characterized in that** the tooling (10) comprises bearing surfaces (12, 12a) forming reference surfaces and cooperating with the blade root (2) so as to position said blade (1) axially in the tooling (10), the tooling (10) further comprising a stop (13) capable of coming to bear on the root (2) or the blade (3) of the blade (1), so as to position said blade (1) in the tooling (10) in a direction (Y) perpendicular to the axial direction (X).

3. A method according to claim 1 or 2, **characterised in that** step (c) is performed when the blade (1) is mounted in the tooling (10).

4. A method according to claim 1 or 2, **characterised in that**, during step (b), the said foils (14) are immobilised in position on the blade (1), the assembly formed by the said blade (1) and the foils (14) then being removed from the tooling (10) before step (c).

5. A method according to any one of claims 1 to 4, **characterised in that** in step (b) the foils (14) are positioned axially with respect to a reference surface of the tooling (10).

6. A method according to any one of claims 1 to 5, **characterized in that**, in step (c), excess refill material (20) extending beyond the refill volume (19) is removed by levelling or scraping.

7. A method according to one of claims 1 to 6 and according to claim 5, **characterized in that** the corresponding end (6) of the blade (3), the reference surface and the foils (14) delimit the refill volume (19), the material (20) being inserted into the said volume (19) in step (c), so as to fill it completely.

8. A method for any of claims 1 to 7, **characterised in that** the refill material (20) is a thermosetting resin.

9. A method according to one of claims 1 to 8, **characterized in that** a closing wall (21) covers said ends (16) of the foils (14) so as to close the refill volume (19), the refill material (20) being inserted or injected into said refill volume (19).
